# EUROPÄISCHE PATENTSCHRIFT

(11) **EP 1 991 035 B1**
(45) Veröffentlichungstag und Bekanntmachung des Hinweises auf die Patenterteilung: **24.10.2012**
(21) Anmeldenummer: 08103814.3
(22) Anmeldetag: 05.05.2008
(51) Int. Cl.: H05B 41/288, B60Q 1/02

(54) **Ansteuerung für die Schalter einer H-Brückenschaltung zum Betreiben einer Hochdruck-Gasentladungslampe in Kraftfahrzeugen**
Control for the switches of a H-bridge for operating a high pressure gas discharge lamp in motor vehicles
Commande pour les commutateurs d'un circuit en pont H pour alimenter une lampe à décharge haute pression dans des véhicules automobiles

(30) Priorität: 05.05.2007 DE 102007021205
(43) Veröffentlichungstag der Anmeldung: 12.11.2008
(73) Patentinhaber: Hella KGaA Hueck & Co., 59552 Lippstadt (DE)
(72) Erfinder: Daub, Wolfgang, 59609 Anröchte (DE); Möller, Stefan, 59557 Lippstadt (DE)

(56) Entgegenhaltungen:
- US-A1- 2004 041 619
- US-A1- 2006 001 459
- US-B1- 6 339 348

## Beschreibung

Die Erfindung bezieht sich auf eine Ansteuerung für die Schalter einer H-Brückenschaltung zum Betreiben einer Hochdruck-Gasentladungslampe in Kraftfahrzeugen, wobei jeweils zwei H-Brückenschalter wechselseitig ütber Steuersignale zur Kommutieruung der Polarität der Hochdruck-Gasentladungslampe angesteuert werden. Eine derartige Ansteuerung ist aus der EP 0 581 091 B1 bekannt.

Beim Umschalten der h-Brückenschaltung müssen jeweils die zwei Schalter, die in einem Brückzweig hintereinander zwischen einem positiven und einem negativen Spannungspotential angeordnet sind, wechselseitig angesteuert werden, so dass immer nur einer dieser beiden Schalter eingeschaltet ist. Wenn beide Schalter gleichzeitig eingeschaltet sind, fließt ein hoher Kurzschlußstrom über die Brücke, der zu Störungen oder gar zur Beschädigung führen kann.

Aus diesem Grunde muß sichergesteilt werden, dass auch beim Umschaltern immer nur einer der beiden Schalter eingeschaltet ist, während der andere Schalter ausgeschaltet ist.

Gemäß EP 0 581 091 B1 wird vorgeschlagen, über einen Pulsgenerator, der die Pulse zum Umschalten der H-Brückenschalker liefert, eine Totzeit zu generieren, um zu verhindern, dass der eine Schalter noch eingeschaltet ist, während der andere gerade eingeschaltet wird. Dies ist jedoch relativ aufwendig.

Die US 2008/001459 A1 beschreibt eine Schaltung zum Verhindern überlappender Spannungen zwischen in Serie geschalteten MOSFET's. Individuelle Zustandsautomaten sind direkt mittels Ein- und Ausgängen der MOSFETs an Treiber angeschlossen, die feststellen können, ob eine vorbestimmte Aufgabe abgearbeitet ist. Jeder Zustandsautomat erzeugt zustandsabhängig ein "Iockout"- Signal, das dazu genutzt wird, einen Betrieb des anderen Treibers unter vorbestimmten Voraussetzungen zu verhindern.

Aus der US 2004/041619 A1 ist eine Schaltung mit einer Vielzahl von elektronischen Schaltern bekannt, bei der ein Treiber so ausgestaltet ist, dass automatisch ein gleichzeitiger Durchlass der Schalter verhindert wird, wenn mindestens einer der Schalter nicht in der Lage ist, eine wiederhergestellte Spannung ohne Leitung aufrecht zu erhalten.

Aufgabe der Erfindung ist es, eine Ansteuerung für eine H-Brückenschaltung zum Betreiben einer Hochdruck-Gasentladungslampe in Kraftfahrzeuge zu schaffen, bei der in einfacher und zuverlässiger Weise sichergestellt wird, dass immer nur einer dieser beiden Schalter eingeschaltet ist.

Diese Aufgabe wird durch die Merkmale des Anspruchs 1 gelöst.

Erfindungsgemäß umfasst die Ansteuerung zwei Transistoren, wobei die Basis des ersten Transistors mit dem Emitter des zweiten Transistors verbunden ist, und die Basis des zweiten Transistors mit dem Emitter des erstenTransistors verbunden ist. Das Steuersignal für einen ersten H-Brückenschalter entspricht dabei dem Spannungssignal über dem Kollektorwiderstand des ersten Transistors, während das Steuersignal für den zweiten H-Brückenschalter dem Spannungssignal über dem Kollektorwiderstand des zweiten Transistors entspricht. Dabei sind die Emitter der beiden Transistoren jeweils über einen Emitterwiderstand mit einer Gleichspannungsquelle verbunden. Die Ansteuerung erhält nun ihrerseits über Schaltsignalgeber Schaltsignale. Zu diesem Zweck ist die Basis der beiden Transistoren jeweils über einen Widerstand mit einem Schaltsignalgeber verbunden ist.

Durch die erfindungsgemäße Basis-Emitterbeschaltung der beiden Transistoren wird erreicht, dass sich die Basis-Emitterspannungen der beiden Transistoren im Einschalt-/Umschaltbereich vorzeichenmäßig nicht überlappen, d.h. während die Basis-Emitterspannung des einen Transistors positiv ist, ist die des anderen Transistors negativ. Im Übergang schneiden sich beide Basis-Emitterspannungsverläufe in vorteilhafter Weise temperaturunabhängig bei Null Volt. Erst wenn die Basis des einen Transistors völlig "ausgeräumt" ist, wird der andere Transistor eingeschaltet. Hiermit wird auf einfache Weise erreicht, dass nur ein Transistor durchgeschaltet ist, während der andere abgeschaltet ist. So wird sichergestellt, dass immer nur ein Steuersignal über dem Schalt-Schwellwert für die H-Brücksenschalter liegt.

Die erfindungsgemäße Ansteuerung benötigt nur sehr wenig Bauelemente und ist daher sehr kostengünstig. Außerdem wird auch über einen sehr weiten Temperaturbereich in zuverlässiger Weise sichergestellt, dass ein ordnungsgemäßes Umschalten der H-Brücke ohne Brückenquerströme gewährleistet ist.

Anhand der beigefügten Zeichnungen wird die Erfindung nachfolgend näher erläutert. Dabei zeigt:
- Fig. 1: eine Blockschaltbild der H-Brückschaltung mit Ansteuerung,
- Fig. 2: eine Ansteuerung gemäß dem Stand der Technik,
- Fig. 2A: den zeitlichen Verlauf der Steuerspannungen sowie der Basis-Emitterspannungen entsprechend der Ansteuerung gemäß Figur 2,
- Fig. 3: eine erfindungsgemäße Ansteuerung,
- Fig.3A: den zeitlichen Verlauf der Steuerspannungen sowie der Basis-Emitterspannungen entsprechend der Ansteuerung gemäß Figur 3,
- Fig. 4: eine Ausführungsform der erfindungsgemäßen Ansteuerung mit Kondensatoren zur Bewirkung einer bestimmten Totzeit,
- Fig. 4A: den zeitlichen Verlauf der Steuerspannungen sowie der Basis-Emitterspannungen entsprechend der Ansteuerung gemäß Figur 4.
- Fig.5: eine komplette H-Brückenschaltung mit der erfindungsgemäßen Ansteuerung.

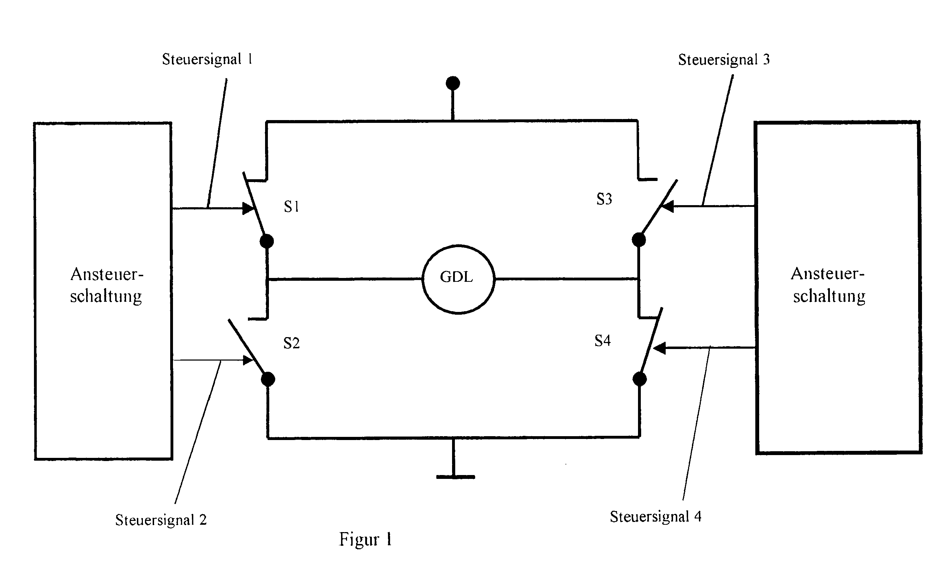

Figur 1 zeigt eine schematische Darstellung der H-Brücke mit der Ansteueuerung für die 4 H-Brückenschalter (S1, S2, S3, S4). Die Gasentaldungslampe (GDL) als zu schaltende Last befindet sich im Mittelzweig zwischen dem linken und rechten Brückenzweig. Bei den Brückenschaltern (S1, S2, S3, S4) handelt es sich vorzugsweise um Transistoren. Dabei werden jeweils die Schalter S1 und S2 sowie die Schalter S3 und S4 wechselseitig angesteuert, wobei die diagonal gegenüberliegenden Schalter S1 und S4 sowie S2 und S3 jeweils simultan angesteuert werden.

Gegenstand der Erfindung ist nun die Ansteuerung (Ansteuerschaltung), welche jeweils zwei der Brückenschalter wechselseitig ansteuert. Dabei entspricht die Ansteuerung für die Schalter S1 und S2 der Ansteuerung für die Schalter S3 und S4.

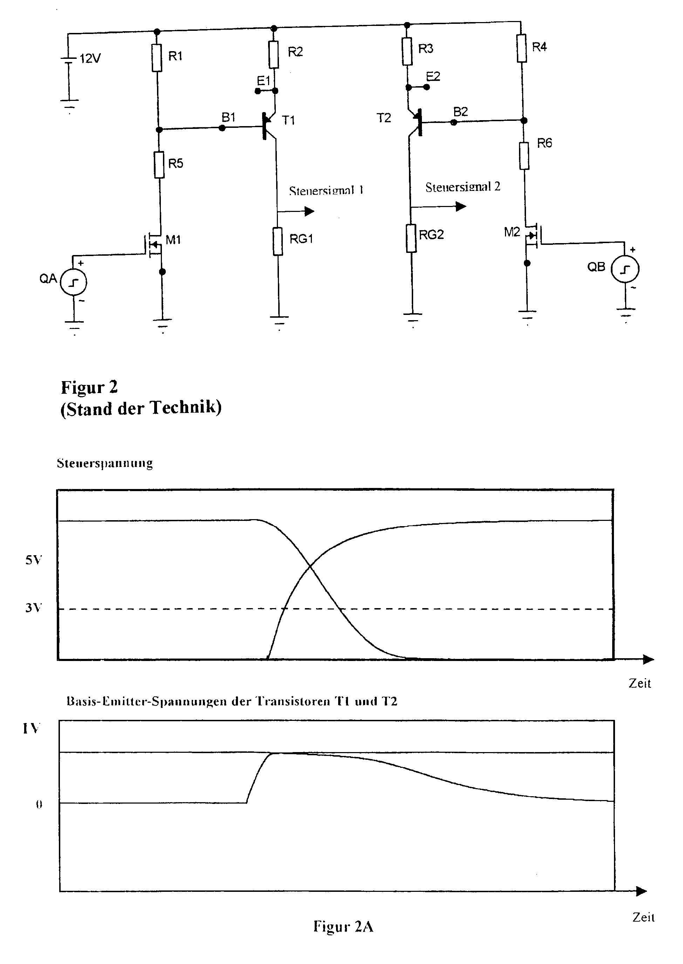

Figur 2 zeigt eine Ansteuerung nach dem Stand der Technik mit zwei wechselseitig angesteuerten Schaltsignalgebern, die jeweils von einem Schalter in Form eines Transistors (M1, M2) sowie von schaltbaren Spannungsquellen (QA, QB) gebildet werden. Über diese Schaltsignalgeber werden wiederum zwei Transistoren (T1, T2) angesteuert um letztendlich zwei Steuersiganle zur Ansteuerung der Brückenschalter (S1, S2 (S1, S2 bzw. S3, S4) zu generieren. Die Basis (B1, B2) jedes Transistors ist dabei einerseits über einen Widerstand (R1, R4) mit einer Gleichspannungsquelle verbunden und andererseits über einen Widerstand (R5, R6) mit dem jeweiligen Schaltsignalgeber (M1, QA; M2, QB). Der Kollektor jedes Transistors (T1, T2) ist über einen Widerstand (RG1, RG2) beispielsweise mit dem Massepotential verbunden, wobei jeweils der Spannungsabfall über dem Kollektorwiderstand (RG1, RG2) als Steuersignal verwendet wird.

Für die Transistoren T1 und T2 werden Bipolar-Transistoren verwendet.

Figur 2A zeigt im unteren Bild den zeitlichen Verlauf der Basis-Emitterspannungen der beiden Transistoren (T1, T2) beim Umschalten infolge eines Schaltsignals der Schaltsignalgeber (M1, QA; M2, QB) entsprechend der Ansteuerung gemäß Figur 2. Wie zu erkennen ist, dauert es relativ lange bis sich die Basis-Emitterspannungen nicht mehr überlappen und deutlich voneinander getrennt sind. Dies führt dazu, dass der eine Transistor noch aktiv ist, während der andere schon eingeschaltet ist. Im oberen Bild von Figur 2A ist der zeitliche Verlauf der Steuerspannungen für die beiden Steuersignale dargestellt, wobei die Schaltschwelle (z.B. 3V) für die H-Brückenschalter (S1, S2, S3, S4) ebenfalls eingezeichnet ist. Es ist deutlich zu erkennen, dass für einen nicht zu vernachlässigenden Zeitraum beide Steuerspannungen oberhalb der Schaltwelle liegen. Dies führt dazu, dass in diesem Zeitraum beide H-Brückensschalter, die eigentlich wechselseitig angesteuert werden sollten, eingeschaltet sind.

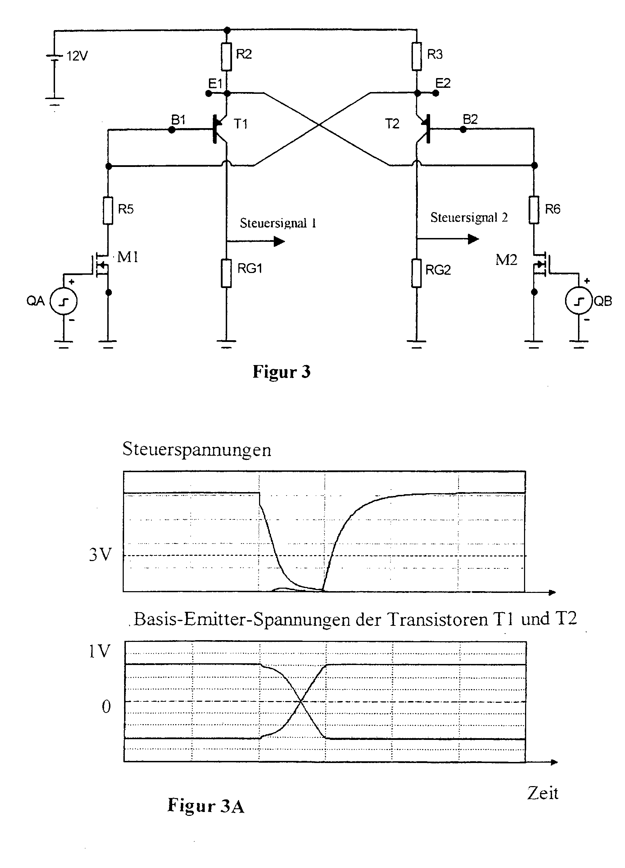

Figur 3 zeigt eine erfindungsgemäße Ansteuerung. Im Unterschied zur Ansteuerung gemäß Figur 2 wurden die beiden Basis-Emitterwiderstände (R1, R4) entfernt. Stattdessen ist die Basis (B1) des ersten Transistors (T1) mit dem Emitter (E2) des zweiten Transistors (T2) verbunden, und die Basis des zweiten Transistors (T2) mit dem Emitter (E1) des ersten Transistors (T1) verbunden.

Der zeitliche Verlauf der Steuerspannungen sowie der Basis-Emitterspannungen für die Ansteuerung gemäß Figur 3 ist in Figur 3A dargestellt. Wie zu erkennen ist, überlappen sich die Basis-Emitterspannungen im Umschaltbereich vorzeichenmäßig nicht, d.h. während die Basis-Emitterspannung des einen Transistors positiv ist, ist die des anderen Transistors negativ. Im Übergang schneiden sich die Basis-Emitterspannungsverläufe in vorteilhafter Weise temperaturunabhängig bei Null Volt. Dadurch wird bewirkt, dass zu keinem Zeitpunkt die Steuerspannung von beiden Steuersignalen gleichzeitig oberhalb der Schaltschwelle für die H-Brückenschalter (S1, S2, S3, S4) liegt. Vielmehr gibt es einen definierten Zeitraum, in dem die Steuerspannungen beider Steuersignale unterhalb der Schaltschwelle liegen, so dass während dieses Zeitraums beide H-Brückenschalter nicht eingeschaltet sind.

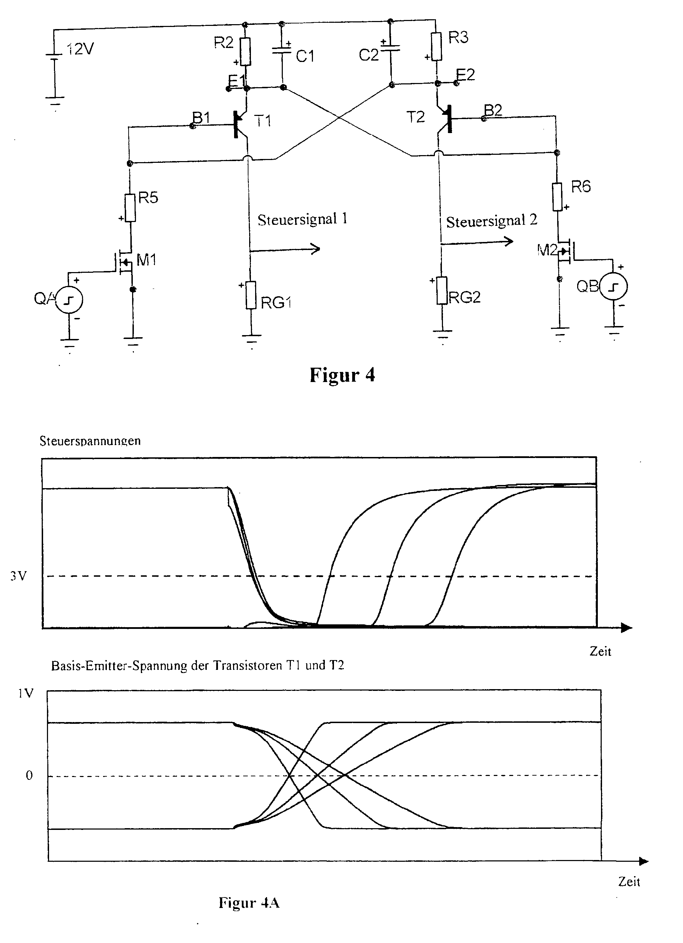

Figur 4 zeigt eine Weiterentwicklung der Ansteuerung gemäß Figur 3. Dabei sind die Emitter (E1, E2) der beiden Transistoren (T1, T2) jeweils über eine Parallelschaltung aus Widerstand (R2 bzw. R3) und Kondensator (C1 bzw. C2) mit einer Gleichspannungsquelle verbunden. Durch die Wahl der Kapazitätswerte für die Kondensatoren (C1 und C2) kann die Totzeit, in der die Steuerspannungen beider Steuersignale unterhalb der Schaltschwelle liegen, in vorteilhafter Weise eingestellt werden, wobei sich auch in diesem Fall die Basis-Emitterspannungsverläufe temperaturunabhängig bei Null Volt schneiden.

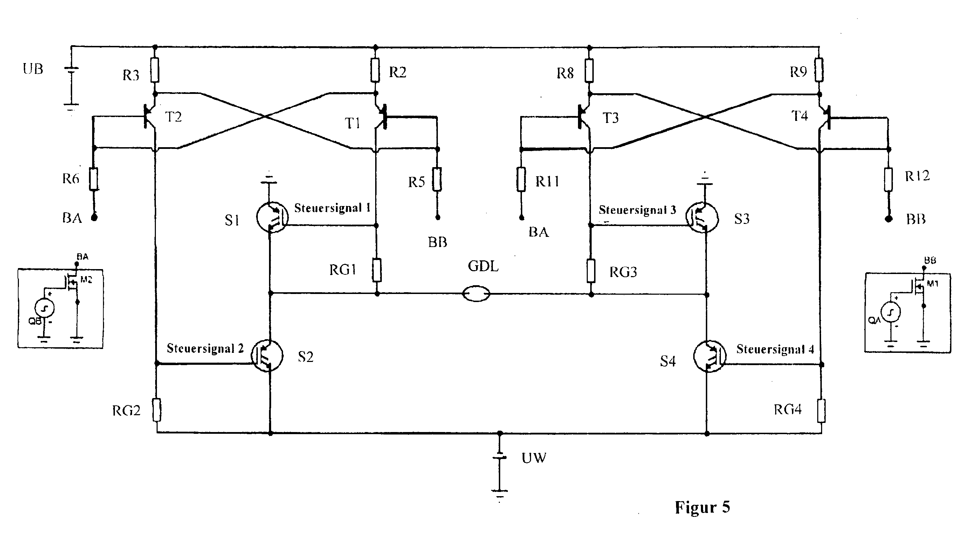

Figur 5 zeigt zum besseren Verständnis eine komplette H-Brückenschaltung inklusive der beiden Ansteuerungen für die wechselseitig anzusteuernden H-Brückenschalter-Paare (S1, S2 sowie S3 und S4). Die vorstehend im Zusammenhang mit der Figur 3 erläuterte erfindungsgemäße Basis-Emitter-Beschaltung der beiden Transistoren T1 und T2 für die Ansteuerung der H-Brückenschalter S1 und S2 findet sich hier für die Transistoren T3 und T4 zur Ansteuerung der H-Brückenschalter S3 und S4 ebenfalls wieder. Die Ausgänge der Schaltsignalgeber (M1, QA; M2, QB) bzw. die Schaltsignaleingänge der Ansteuerungen sind mit BA und BB bezeichnet. Die Versorgungsspannung für die H-Brückenschaltung ist mit UW bezeichnet, während die Versorungsspannung für die Ansteuerung mit UB bezeichnet ist.

## Patentansprüche

1. Ansteuerung für die Schalter einer H-Brückenschaltung zum Betreiben einer Hochdruck-Gasentladungslampe in Kraftfahrzeugen, wobei jeweils zwei H-Brückenschalter wechselseitig über Steuersignale zur Kommutierung der Polarität der Hochdruck-Gasentladungslampe angesteuert werden, **dadurch gekennzeichnet, dass**
- die Ansteuerung zwei Transistoren (T1, T2) umfasst, wobei die Basis (B1) des ersten Transistors (T1) mit dem Emitter (E2) des zweiten Transistors (T2) verbunden ist, und die Basis (B2) des zweiten Transistors (T2) mit dem Emitter (E1) des ersten Transistors (T2) verbunden ist,
- das Steuersignal für einen ersten H-Brückenschalter dem Spannungssignal über dem Kollektorwiderstand (RG1) des ersten Transistors (T1) entspricht,
- das Steuersignal für einen zweiten H-Brückenschalter dem Spannungssignal über dem Kollektorwiderstand (RG2) des zweiten Transistors (T1) entspricht,
- die Emitter (E1, E2) der beiden Transistoren jeweils über einen Emitterwiderstand (R2, R3) mit einer Gleichspannung verbunden sind,
- die Basen (B1, B2) der beiden Transistoren (T1, T2) jeweils über einen Widerstand (R5, R6) mit einem Schaltsignalgeber (M1, QA; M2, QB) verbunden sind,
so dass sich die Basis-Emitterspannungen der beiden Transistoren (T1, T2) im Einschalt- / Umschaltbereich vorzeichenmäßig nicht überlappen.

2. Ansteuerung nach Anspruch 1,
**dadurch gekennzeichnet, dass**
die beiden Transistoren (T1, T2) Bipolar- Transistoren sind.

3. Ansteuerung nach Anspruch 1 oder 2,
**dadurch gekennzeichnet, dass**
die Emitter (E1, E2) der beiden Transistoren (T1, T2) jeweils über eine Parallelschaltung aus Widerstand (R2 bzw. R3) und Kondensator (C1 bzw. C2) mit einer Gleichspannungsquelle verbunden sind.

4. Ansteuerung nach einem der vorstehenden Ansprüche,
**dadurch gekennzeichnet, dass**
die Schaltsignalgeber (M1, QA; M2, QB) jeweils von einer über einen Transistor (M1, M2) ansteuerbaren Spannungsquelle (QA, QB) gebildet werden.

## Claims

1. Activator for H-bridge switches used for operating a
high-pressure gas-discharge lamp in motor vehicles in which two H-bridge switches are alternately activated via control pulses to commutate the high-pressure gas-discharge lamp's polarity. **Characterized by**
- the activator comprising two transistors (T1, T2). The base (B1) of the first transistor (T1) is connected to the emitter (E2) of the second transistor (T2) and the base (B2) of the second transistor (T2) is connected to the emitter (E1) of the first transistor (T1).
- the control pulse for the first H-bridge switch corresponds to the voltage signal through the collector resistor (RG1) of the first transistor (T1).
- the control pulse for the second H-bridge switch corresponds to the voltage signal through the collector resistor (RG2) of the second transistor (T2).
- the emitters (E1, E2) of the two transistors each being connected with direct voltage via an emitter resistor (R2, R3), the bases (B1, B2) of the two transistors (T1, T2) each being connected to a switching pulse emitter (M1, QA; M2, QB) via a resistor.
so that the base emitter voltages of the two transistors (T1, T2) do not produce positive/negative convergence when switching.

2. Activation as per claim 1,
**characterized by** the two transistors (T1, T2) being bipolar transistors.

3. Activation as per claim 1 or 2, **characterized by** the emitters (E1, E2) of the two transistors (T1, T2) each being connected to a DC power source via a parallel circuit consisting of a resistor (R2 or R3) and a capacitor (C1 or C2).

4. Activation as per one of the above claims, **characterized by** the switching pulse emitters (M1, QA; M2, QB) being realized by a power source (QA, QB) that can be activated via a transistor (M1, M2).

## Revendications

1. Commande des commutateurs d'un contrôleur de pont H permettant d'exploiter une lampe à décharge de gaz haute pression dans des véhicules, deux contrôleurs de pont H étant commandés alternativement par le biais de signaux de commande pour commuter la polarité de la lampe à décharge de gaz haute pression, **caractérisée par le fait que**
- la commande comprend deux transistors (T1, T2), la base (B1) du premier transistor (T1) étant reliée à l'émetteur (E2) du deuxième transistors (T2), et la base (B2) du deuxième transistor (T2) étant reliée à l'émetteur (E1) du premier transistor (T2),
- le signal de commande du premier contrôleur à pont H corrrespond au signal de tension passant par la résistance du collecteur (RG1) du premier transistor (T1),
- le signal de commande du deuxième contrôleur à pont H corrrespond au signal de tension passant par la résistance du collecteur (RG2) du deuxième transistor (T1),
- les émetteurs (E1, E2) des deux transistors sont respectivement reliés à une tension continue via une résistance d'émetteur (R2, R3), les bases (B1, B2) des deux transistors (T1, T2) étant respectivement reliées via une résistance (R5, R6) à un générateur de signaux (M1, QA ; M2, QB),
de sorte que les tensions d'émetteur de base des deux transistors (T1, T2) ne se chevauchent pas quant au signe dans la zone d'activation/de commutation.

2. Commande selon la revendication 1,
**caractérisée par le fait que** les deux transistors (T1, T2) sont des transistors bipolaires.

3. Commande selon la revendication 1 ou 2, **caractérisée par le fait que** les émetteurs (E1, E2) des deux transistors (T1, T2) sont respectivement reliés via un raccordement en parallèle composé d'une résistance (R2 ou R3) et d'un condensateur (C1 ou C2) à une source de tension continue.

4. Commande selon une des revendications précédentes, **caractérisée par le fait que** les générateurs de signaux (M1, QA ; M2, QB) sont respectivement formés par une tension de commande (QA, QB) pouvant être pilotée par le biais d'un transistor (M1, M2).
